(19) Europäisches Patentamt

European Patent Office

Office européen des brevets

(11) **EP 3 160 028 B1**

(12) # EUROPEAN PATENT SPECIFICATION

(45) Date of publication and mention
of the grant of the patent:
**04.08.2021 Bulletin 2021/31**

(51) Int Cl.:
*H02M 3/338* *(2006.01)*          *H02M 3/337* *(2006.01)*
*H02M 3/335* *(2006.01)*          *H02M 1/00* *(2006.01)*

(21) Application number: **16190141.8**

(22) Date of filing: **22.09.2016**

(54) **ELECTRONIC CONVERTER AND RELATED METHOD OF OPERATING AN ELECTRONIC CONVERTER**

**ELEKTRONISCHER WANDLER UND ZUGEHÖRIGES VERFAHREN ZUM BETRIEB EINES ELEKTRONISCHEN WANDLERS**

**CONVERTISSEUR ELECTRONIQUE ET PROCEDE ASSOCIE DE FONCTIONNEMENT D'UN CONVERTISSEUR ELECTRONIQUE**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.09.2015 IT UB20153934**

(43) Date of publication of application:
**26.04.2017 Bulletin 2017/17**

(73) Proprietors:
• **OSRAM GmbH**
  **80807 München (DE)**
• **OSRAM S.P.A. - SOCIETA' RIUNITE OSRAM EDISON CLERICI**
  **20126 Milano (IT)**
  Designated Contracting States:
  **IT**

(72) Inventor: **LUCCATO, Daniele**
  **I-31029 Vittorio Veneto (Treviso) (IT)**

(74) Representative: **Meindl, Tassilo et al**
  **Buzzi, Notaro & Antonielli d'Oulx S.p.A.**
  **Corso Vittorio Emanuele II, 6**
  **10123 Torino (IT)**

(56) References cited:
  **WO-A2-2015/044846     US-A- 4 257 087**
  **US-A1- 2010 259 241     US-A1- 2010 265 741**
  **US-A1- 2012 281 435**

**Description**

Field of the Invention

The description relates to electronic converters.

Description of the Related Art

Electronic converters for light sources, comprising e.g. at least one LED (Light Emitting Diode) or other solid-state lighting means, may offer a direct current output. Such current may be steady or vary in time, e.g. in order to adjust the brightness emitted by the light source (so-called dimming function).

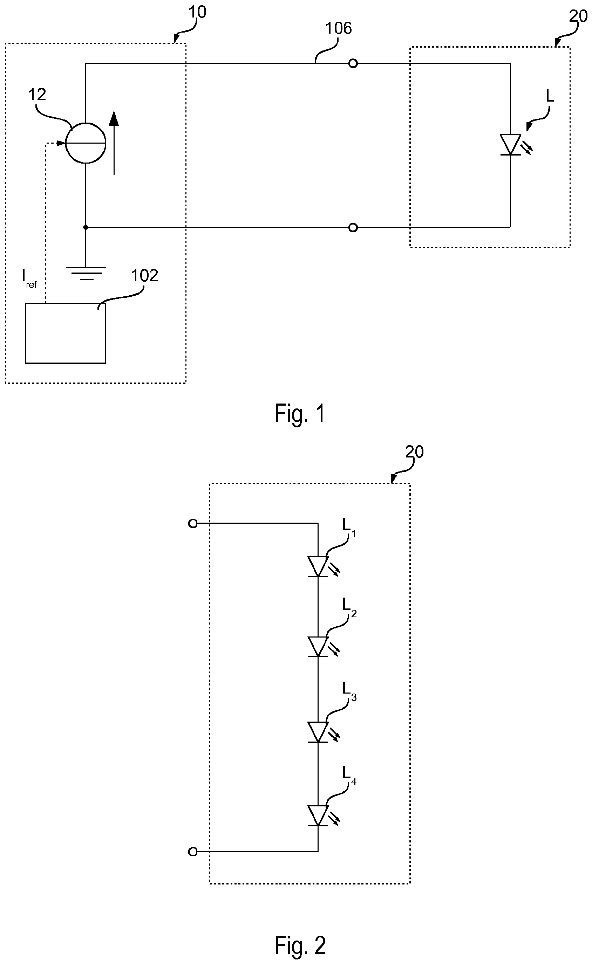

Figure 1 shows a possible lighting arrangement comprising an electronic converter 10 and a lighting module 20 including, e.g., at least one LED L.

For instance, Figure 2 shows an example of a lighting module 20 comprising, e.g., a LED chain, i.e. a plurality of LEDs connected in series. As an example, Figure 2 shows four LEDs $L_1$, $L_2$, $L_3$ and $L_4$.

Electronic converter 10 usually comprises a control circuit 102 and a power circuit 12 (e.g. an AC/DC or DC/DC switching supply) which receives at an input a supply signal (e.g. from the mains) and provides at an output, via a power output 106, a direct current. Such a current may be steady or vary in time. E.g., control circuit 102 may set, via a reference channel $I_{ref}$ of power circuit 12, the current requested by LED module 20.

For example, such a reference channel $I_{ref}$ may be used for adjusting the brightness of the light emitted by lighting module 20. Actually, in general terms, a regulation of the light brightness emitted by LED module 20 may be achieved by regulating the average current flowing through the lighting module, for example by setting a lower reference current $I_{ref}$ or by switching on or off power circuit 12 through a Pulse Width Modulation (PWM) signal, typically at a frequency between 100 and 500Hz.

Generally speaking, there are known many types of electronic converters, which are mainly divided into insulated and non-insulated converters. For example, among the non-insulated electronic converters we may name *"buck", "boost", "buck-boost", "Cuk", "SEPIC"* and *"ZETA"* converters. Insulated converters are e.g. *"flyback", "forward"* converters. Such converter arrangements are well known to the person skilled in the art.

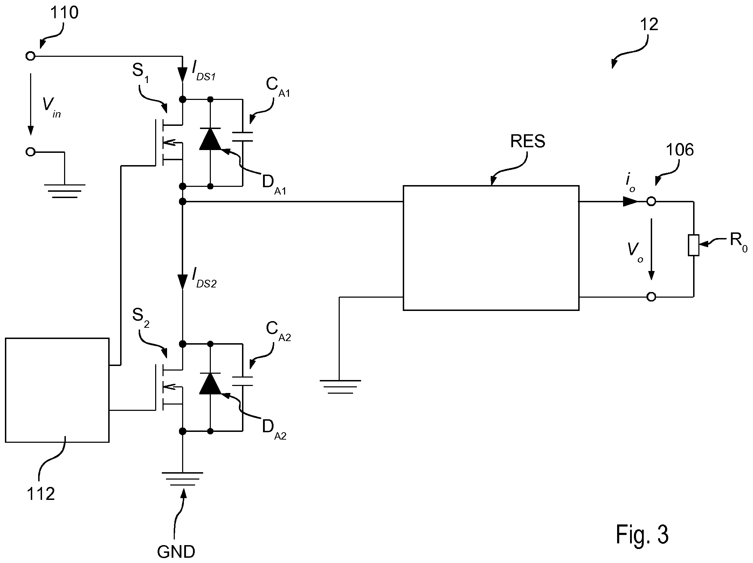

For example, Figure 3 shows a circuit diagram of a half-bridge converter operating as a DC/DC converter. The person skilled in the art will appreciate that an input AC current may be converted into a direct current via a rectifier, e.g. a diode-bridge rectifier, and optionally a filter capacitor.

In the presently considered example, converter 12 receives at input, via two input terminals 110, a voltage $V_{in}$ and provides at output, via two output terminals 106, a regulated voltage $V_o$ or a regulated current $i_o$.

In the presently considered example, a load $R_0$ is connected with said output 106, and it may consist in the previously described lighting module 20.

Between input 110 and output 106 there is interposed a half-bridge and a resonant circuit RES, typically including at least one inductor and at least one capacitor.

Specifically, both electronic switches $S_1$ and $S_2$ of the half-bridge are connected in series between both input terminals 110, wherein the switching of electronic switches $S_1$ and $S_2$ is driven via a control unit 112. For example, such electronic switches $S_1$ and $S_2$ may be N-MOS transistors or n-channel MOSFETs (Metal-Oxide-Semiconductor Field-Effect Transistors). Moreover, such switches $S_1$ and $S_2$ may have respective capacitances $C_{A1}$, $C_{A2}$ and respective diodes $D_{A1}$, $D_{A2}$ connected therewith in parallel. For example, capacitances $C_{A1}$ and $C_{A2}$ may represent the intrinsic capacitances of a MOSFET, and/or may be implemented via additional capacitors, which are connected in parallel with switches $S_1$ and $S_2$. On the contrary, diodes $D_{A1}$ and $D_{A2}$ may represent the body diodes of a MOSFET, and/or may be implemented via additional diodes.

In the presently considered example, a first terminal of resonant circuit RES is connected directly at the intermediate point between electronic switches $S_1$ and $S_2$. On the contrary, the second terminal of resonant circuit RES is connected with the second input terminal, representing a ground GND. Therefore, switches $S_1$ and $S_2$ may be used for connecting selectively the first terminal of resonant circuit RES to voltage $V_{in}$ or to ground $GND_1$. As stated above, the control may be either a current or a voltage control. To this purpose, control unit 112 drives switches $S_1$ and $S_2$ so that output voltage $V_o$ or output current $i_o$ is regulated on a desired value, such as reference current $I_{ref}$. To this purpose it is possible to employ, in a way known in itself, a sensor adapted to detect current $i_o$ or voltage $V_o$.

In the prior art it has moreover been proposed to drive such a converter with a so-called "soft switching", wherein switches $S_1$ and $S_2$ are switched when the voltage across switches $S_1$ and $S_2$ is zero (zero voltage switching, ZVS). As a matter of fact, such driving may reduce switching losses and Electromagnetic Interference (EMI). For example, such driving typically comprises four steps:

-   in a first step, switch $S_1$ is closed and switch $S_2$ is opened: during this step energy is transferred to resonant circuit RES;

- in a second step, switch $S_1$ is opened and switch $S_2$ is opened: during this step the resonance of circuit RES is used for discharging capacitor $C_{A2}$ associated with switch $S_2$, bringing the voltage across switch $S_2$ to zero;
- in a third step, switch $S_1$ is opened and switch $S_2$ is closed: during this step circuit RES typically oscillates freely; and
- in a fourth step, switch $S_1$ is opened and switch $S_2$ is opened: during this step, the resonance of circuit RES is used to charge capacitor $C_{A2}$ associated with switch $S_2$, bringing the voltage across switch $S_1$ to zero.

The inventor has observed that the half-bridge converter arrangement is particularly suitable for driving lighting modules 20 including a LED chain, i.e. one or more LEDs connected in series. In this case, control circuit 112 drives switches $S_1$ and $S_2$ on the basis of the current supplied to the LEDs (or of another indicative value for such a current), in such a way as to regulate the current to a desired value, for example the previously described value $I_{ref}$. On the other hand, output voltage $V_o$ mainly depends on the number of LEDs which are connected in series in lighting module 20 and on the forward voltage thereof.

Accordingly, the present invention relates to an electronic half-bridge converter having a specific resonant circuit RES. In this respect, documents WO 2015/044846 A2, US 2010/259241 A1 and US 2010/265741 A1 may also be of interest for the present invention.

Object and Summary

Specifically, the inventor has observed that, in order to enable a zero voltage switching and to reduce the current ripple in the output signal, i.e. current $i_o$, typically measured as *Root Mean Square* (RMS), resonant circuit RES must be properly designed.

According to various embodiments, said object is achieved thanks to an electronic half-bridge converter having the features set forth in the claims that follow. The claims also concern a related method of operating an electronic half-bridge converter.

The claims are an integral part of the technical teaching provided herein with reference to the invention.

As previously stated, the present description refers to an electronic half-bridge converter which provides a power signal via an output.

Specifically, the converter comprises a resonant circuit and a half-bridge comprising a first and a second electronic switch connected in series, for connecting selectively the resonant circuit to a supply signal or a ground. According to the present invention, the resonant circuit comprises:

- a transformer comprising a primary winding and a first and a second secondary winding, wherein the first and the second secondary winding have the same number of turns and are connected in anti-series,
- at least one capacitor, wherein the at least one capacitor and the primary winding are connected in series between the intermediate point between the first and the second electronic switch and the supply signal and/or ground,
- a diode,
- a first branch connected in parallel with the diode and comprising a first capacitor connected in series with the first secondary winding of the transformer, and
- a second branch connected in parallel with the diode and comprising the second secondary winding of the transformer connected in series with the output.

For example, in various embodiments, the first terminal of the first secondary winding is connected with the cathode of the diode, and the second terminal of the first secondary winding is connected, via the first capacitor, with the anode of the diode. The first terminal of the second secondary winding may be connected with the cathode of the diode, and the second terminal of the second secondary winding may be connected with the positive terminal of the output and, e.g. via the optional second capacitor, with the anode of the diode, which corresponds to the second output terminal.

Therefore, in some embodiments, the inductances of the resonant circuit may be implemented completely in a transformer including two secondary windings. However, generally speaking, at least one inductor may also be connected in series with the primary winding and/or at least one of the secondary windings of the transformer.

The converter moreover includes a control unit configured to drive the half-bridge switches with the following time intervals, which are repeated periodically:

a) a first time interval, wherein the first switch is closed and the second switch is opened, whereby the diode is opened, because the voltage across the first secondary winding is positive;
b) a following second time interval, wherein both switches are opened;
c) a following third time interval, wherein the first switch is opened and the second switch is closed; and
d) a following fourth time interval, wherein both switches are opened.

According to the present invention, during the third time interval, the resonance is determined by the leakage inductances of the first and the second secondary winding and the first capacitor. Specifically, thanks to this resonance, the current flowing through the diode reaches zero and the diode opens and stays opened, whereby the resonant circuit is different and the first and the second secondary winding are no longer connected in parallel, but in series and the output is fed by the energy of the first capacitor till the subsequent start of the third time interval.

In various embodiments, a respective capacitance and a respective diode are associated to the half-bridge switches. In this case, the converter of the present description is adapted to fully discharge the capacitance associated to the second switch during the second interval, so that the second switch may be closed at the beginning of the third interval at zero voltage. Moreover, during the fourth time interval, the capacitance associated to the second switch is charged substantially up to the supply voltage, so that the first switch may be closed at the beginning of the first interval at zero voltage.

Brief Description of the Annexed Views

The invention will now be described, by way of non-limiting example only, with reference to the annexed views, wherein:

- Figures 1 to 3 have already been described in the foregoing,
- Figure 4 shows a half-bridge converter according to the present description; and
- Figures 5 to 8 show details of embodiments of a driving of the converter of Figure 7.

Detailed Description of Embodiments

In the following description, numerous specific details are given to provide a thorough understanding of the embodiments. The embodiments can be practiced without one or more of the specific details, or with other methods, components, materials, etc. In other instances, well-known structures, materials, or operations are not shown or described in detail to avoid obscuring various aspects of the embodiments.

Reference throughout this specification to "one embodiment" or "an embodiment" means that a particular feature, structure, or characteristic described in connection with the embodiment is included in at least one embodiment. Thus, the appearances of the phrases "in one embodiment" or "in an embodiment" in various places throughout this specification are not necessarily all referring to the same embodiment. Furthermore, particular features, structures, or characteristics may be combined in any suitable manner in one or more embodiments.

The headings provided herein are for convenience only and do not interpret the extent of protection or scope of the embodiments.

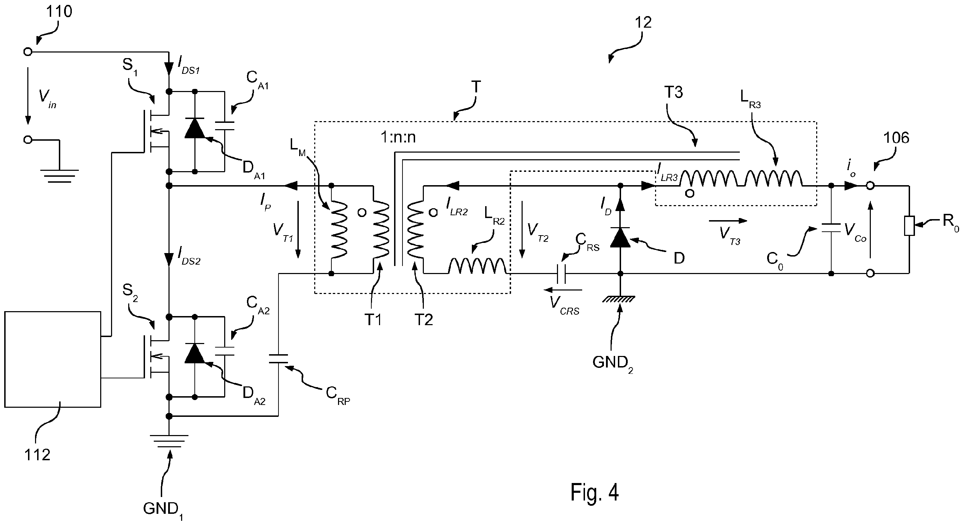

In the following Figures 4 to 8, the parts, elements or components which have already been described with reference to Figures 1 to 3 are denoted with the same references previously used in such Figures; the description of such previously described elements will not be repeated in the following, so as not to overburden the present detailed description.

Substantially, also the electronic converter of the present description is driven by a half-bridge.

For example, Figure 4 shows a first embodiment of an electronic half-bridge converter.

In this case, too, converter 12 receives at input, via two input terminals 110, a supply signal such as e.g. a DC voltage $V_{in}$, and provides at output, via two output terminals 106, a regulated voltage $V_o$ or preferably a regulated current $i_o$.

In the presently considered embodiment, converter 12 comprises a half-bridge, i.e. two electronic switches $S_1$ and $S_2$, which are connected in series between input terminals 110, wherein the switching of electronic switches $S_1$ and $S_2$ is driven by a control unit 112. For example, control unit 112 may be an analog and/or digital circuit, such as e.g. a microprocessor which is programmed via a software code.

For example, in the present embodiment such electronic switches $S_1$ and $S_2$ are N-MOS transistors or n-channel MOSFETs (Metal-Oxide-Semiconductor Field-Effect Transistors).

In the presently considered embodiment, such switches $S_1$ and $S_2$ have respective capacitances $C_{A1}$, $C_{A2}$ and respective diodes $D_{A1}$, $D_{A2}$ connected in parallel therewith. For example, capacitances $C_{A1}$ and $C_{A2}$ may represent the intrinsic capacitances of a MOSFET, and/or may be implemented via additional capacitors, which are connected in parallel with switches $S_1$ and $S_2$. On the other hand, diodes $D_{A1}$ and $D_{A2}$ may represent the body diodes of a MOSFET, and/or may be implemented via additional diodes.

Converter 12 moreover comprises a transformer T, including a primary winding T1 and two secondary windings T2 and T3. Specifically, transformer T may be modelled as an ideal transformer having a given ratio of the number of turns 1:n:n, an inductor $L_M$ which represents the magnetising induction of transformer T, an inductor $L_{R2}$ which represents the leakage inductance between the primary winding T1 and the first secondary winding T2 of transformer T, and an inductor $L_{R3}$ which represents the leakage inductance between the primary winding T1 and the second secondary winding T3 of transformer T.

For example, in the presently considered embodiment, a first terminal of primary winding T1 of transformer T is connected directly at the intermediate point between electronic switches $S_1$ and $S_2$. On the other hand, the second terminal of primary winding T1 of transformer T is connected via at least one capacitor $C_{RP}$ to the first input terminal and/or to the second input terminal which represents a first ground $GND_1$. Therefore, switches $S_1$ and $S_2$ may be used for connecting selectively the first terminal of primary winding T1 of transformer T to voltage $V_{in}$ or to ground $GND_1$.

Generally speaking, on the secondary side of transformer T, the converter includes three branches which are connected in parallel:

- the first branch includes the first secondary winding T2 of transformer T and a capacitor $C_{RS}$ connected in series;
- the second branch includes diode D, or in general an electronic switch driven correspondingly; and
- the third branch includes the second secondary winding T3 of transformer T and optionally a capacitor $C_o$ connected in series, wherein load $R_0$, i.e. output 106, is connected in series with the second secondary winding T3 and in parallel with capacitor $C_o$ (if provided).

Specifically, in various embodiments, both secondary windings T2 and T3 of transformer T are directly connected in anti-series.

For example, in the embodiment shown in Figure 4, the first terminal of secondary winding T2 of transformer T is connected directly to the cathode of diode D. On the other hand, the second terminal of secondary winding T2 is connected via capacitor $C_{RS}$ to the anode of diode D. However, components T2 and $C_{RS}$ may also be reversed.

Therefore, in order to ensure that the secondary winding T3 of transformer T and the secondary winding T2 of transformer T may be directly connected in anti-series, in the presently considered embodiment the anode of diode D is connected via the secondary winding T3 of transformer T with the first output terminal 106 (positive terminal). On the other hand, the anode of diode D is connected directly to the second terminal of output 106 (negative terminal). However, in this case, too, components T3 and $C_o$ may also be reversed.

Finally, also in this case the optional capacitor $C_o$ may be connected in parallel with output 106, i.e. directly to the terminals of output 106. Capacitor $C_o$ is optional and it is useful, for instance, in the case of a resistive load, to keep output voltage constant; however, in the case of a LED load, the voltage of the load is constrained by the LED voltage itself, and therefore $C_o$ may also be omitted.

According to the present invention, both windings T2 and T3 have the same number of turns, i.e. transformer T has a ratio 1:n:n.

As explained in the foregoing, transformer T includes two secondary windings T2 and T3. Therefore, transformer T includes a first leakage inductance $L_{R2}$ between the primary winding T1 and the secondary winding T2, and a second leakage inductance $L_{R3}$ between the primary winding T1 and the third winding T3. On the other hand, the magnetising inductance $L_M$ is present on the primary side of transformer T. For example, in various embodiments, the leakage inductance $L_{R2}$ and $L_{R3}$ may be between 1 and 200 $\mu$H (micro-Henry), e.g. between 100 e 150 $\mu$H.

Generally speaking, inductances $L_M$, $L_{R2}$ and $L_{R3}$ may include additional inductors, e.g. an inductor connected in parallel with the primary and/or secondary winding of transformer T, and/or an inductor connected in series with the primary and/or secondary winding of transformer T.

Therefore, in various embodiments, converter 12 includes the following resonant elements:

- capacitances $C_{A1}$ and $C_{A2}$ of MOSFETs $S_1$ and $S_2$;
- primary resonant capacitance $C_{RP}$;
- secondary resonant capacitance $C_{RS}$;
- optional output capacitance $C_o$;
- magnetising inductance $L_M$, and
- leakage inductances $L_{R2}$ and $L_{R3}$.

In the following a possible embodiment will be described for driving switches $S_1$ and $S_2$ of Figure 4.

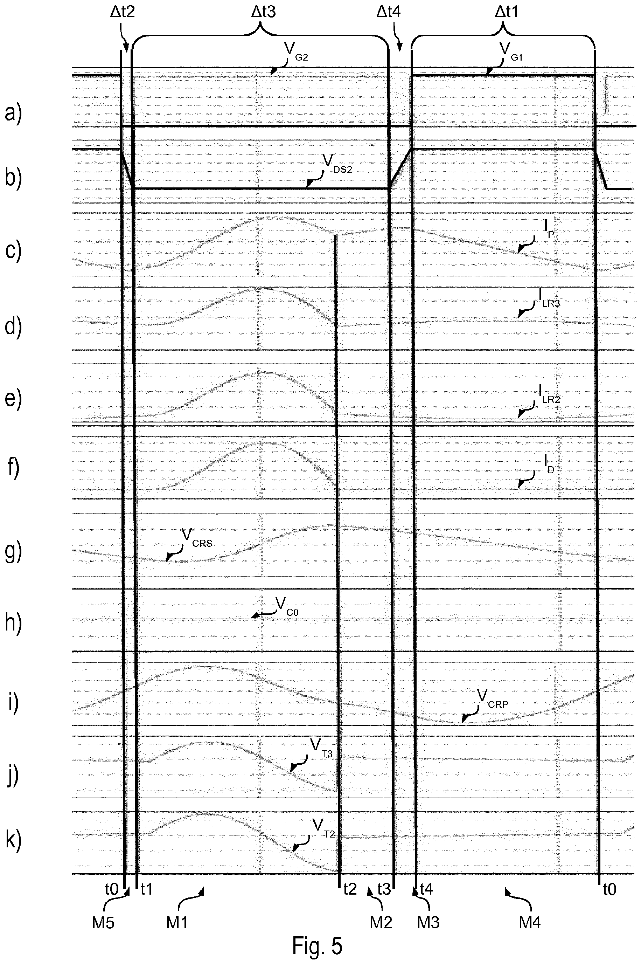

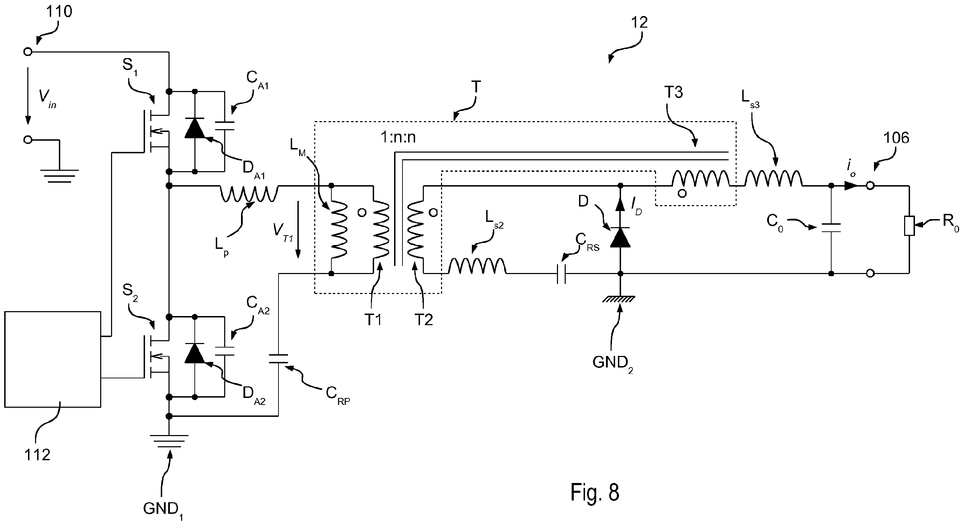

In this respect, Figure 5 shows the waveforms of some signals during these driving steps. Specifically, Figures 8a-8k respectively show:

a) driving signal $V_{G1}$ for switch $S_1$ and driving signal $V_{G2}$ for switch $S_2$,

b) voltage at the intermediate point between switches $S_1$ and $S_2$, i.e. voltage $V_{DS2}$ across switch $S_2$,

c) current $I_P$ flowing through the primary winding T1 of transformer T,

d) current $I_{LR3}$ flowing through the second secondary winding T3 of transformer T, as well as the leakage inductance $L_{R3}$,

e) current $I_{LR2}$ flowing through the first secondary winding T2 of transformer T, as well as the leakage inductance

$L_{R2}$ and capacitor $C_{RS}$,

f) current $I_D$ flowing through diode D,

g) voltage $V_{CRS}$ across capacitance $C_{RS}$,

h) output voltage $V_{Co}$ across capacitance $C_o$, i.e. the output voltage

i) voltage $V_{CRP}$ across capacitance $C_{RP}$,

j) voltage $V_{T3}$ across the second secondary winding T3 of transformer T, and

k) voltage $V_{T2}$ across the first secondary winding T2 of transformer T.

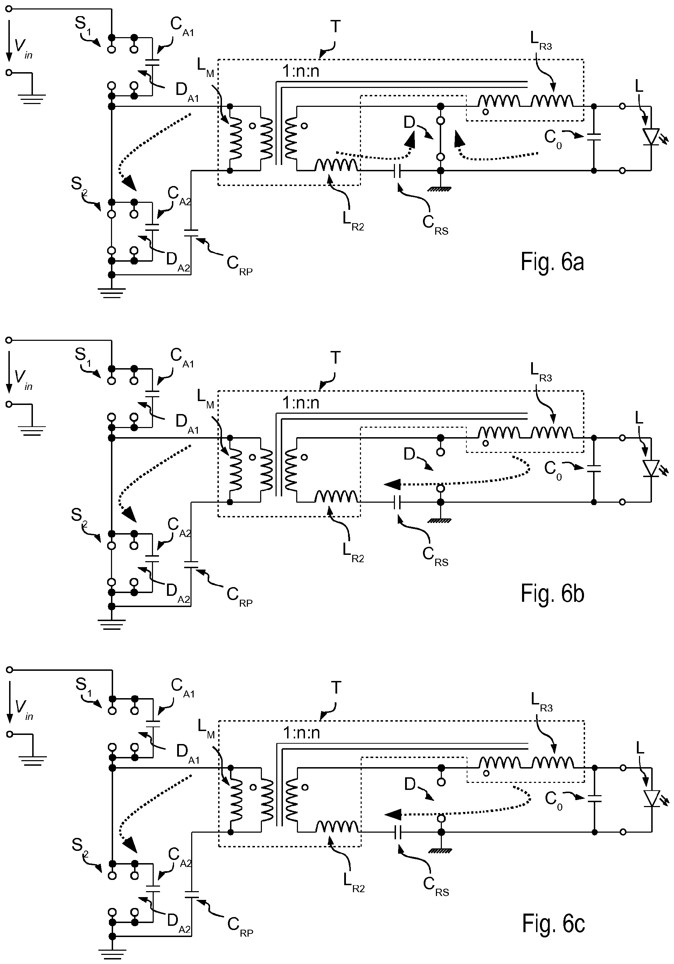

At a time $t1$, switch $S_2$ is closed and switch $S_1$ stays opened. Therefore, in this operating step (M1) diodes $D_{A1}$, $D_{A2}$ are opened and diode (or switch) D is closed, when voltage $V_{T2}$ across the secondary winding is higher than voltage $V_{CRS}$ across capacitor $C_{RS}$ and has opposite sign. The corresponding equivalent circuit diagram of this driving step is shown in Figure 6a. Specifically, as will be better detailed in the following, voltage $V_{DS2}$ may be zero at this time and the switching of switch $S_2$ may take place at zero voltage.

During this step, the resonant components oscillate and energy is partly output via T3 and partly charges capacitor $C_{RS}$.

Specifically, in this operating step, diode D is traversed by the sum of two currents:

- current $I_{LR2}$ flowing through secondary winding T2 of transformer T, and
- current $I_{LR3}$ flowing through the third winding T3 of transformer T:

$$I_D = I_{LR2} + I_{LR3} \qquad (1)$$

Therefore, assuming the load voltage as being substantially constant, e.g. due to the presence either of a capacitor $C_o$ having a higher capacitance than $C_{RS}$ or of a LED load at output, resonance is mainly determined by leakage inductances $L_{R2}$ and $L_{R3}$ and by capacitor $C_{RS}$. For example, the resonant period of this resonance may be approximated through the following equation:

$$Tres_1 \cong 2 \cdot \pi \cdot \sqrt{\frac{(C_{RS} * C_{RP})}{(C_{RS} + C_{RP})} \frac{L_{RS2} \cdot L_{RS3}}{L_{RS2} + L_{RS3}}} \qquad (2)$$

Thus, thanks to this resonance, at time $t2$ current $I_D$ flowing through diode D reaches zero and diode D opens and stays opened, because the voltage across Vcrs-(Vcrp/n) turns positive, while switch $S_2$ stays closed and switch $S_1$ stays opened; in this operating step (M2) as well, diodes $D_{A1}$, $D_{A2}$ are opened. The corresponding equivalent circuit diagram of this driving step is shown in Figure 6b.

Normally, the oscillation widths of currents $I_{LR2}$ and $I_{LR3}$ during step M1 are different, because during switching at time $t1$ the voltages across capacitors $C_{RS}$ and $C_o$ are typically different. On the other hand, at time t2 when diode D is opened (and during step M2), currents $I_{LR2}$ and $I_{LR3}$ have the same value but opposite sign, because diode D is opened:

$$I_{LR2} = -I_{LR3} \qquad (3)$$

Thus, during this step (M2), the resonant circuit is different from previous step (M1), and windings T2 and T3 are no longer connected in parallel, but in series. As a matter of fact, now the output is fed by the energy of $C_{RS}$ till the subsequent time $t1$, resonating with the leakage inductances in series, which reduces the output ripple.

For example, assuming again that the output voltage is constant, because the capacitance of output capacitor $C_o$ is much higher than capacitor CRS, or due to a LED load, the resonance is mainly determined by leakage inductances $L_{R2}$ and $L_{R3}$ and capacitor $C_{RS}$, and the resonant period of this resonance may be approximated through the following equation:

$$Tres_2 \cong 2 \cdot \pi \cdot \sqrt{C_{RS} \cdot (L_{RS2} + L_{RS3})} \qquad (4)$$

At a time t3, switch $S_2$ is opened while switch $S_1$ stays opened. Moreover, diodes $D_{A1}$, $D_{A2}$ and D are opened during this operating step (M3). The corresponding equivalent circuit diagram of this driving step is shown in Figure 6c.

During this operating step, current $I_P$ on the primary side of transformer T is positive, and discharges capacitance

$C_{A1}$ and charges capacitance $C_{A2}$ until the voltage across switch $S_2$ reaches input voltage $V_{in}$ at a time $t4$. Generally speaking, when voltage $V_{DS2}$ across switch $S_2$ reaches input voltage $V_{in}$ it is possible to involve diode $D_{A1}$ as well. As a matter of fact, from this moment on, current $I_P$ flowing through the primary side of transformer T will only flow through diode $D_{A1}$, and voltage $V_{DS2}$ across switch $S_2$ keeps input voltage $V_{in}$; in other words, voltage $V_{DS1}$ across switch $S_1$ stays at zero, which keeps the condition for a zero voltage switching of switch $S_1$.

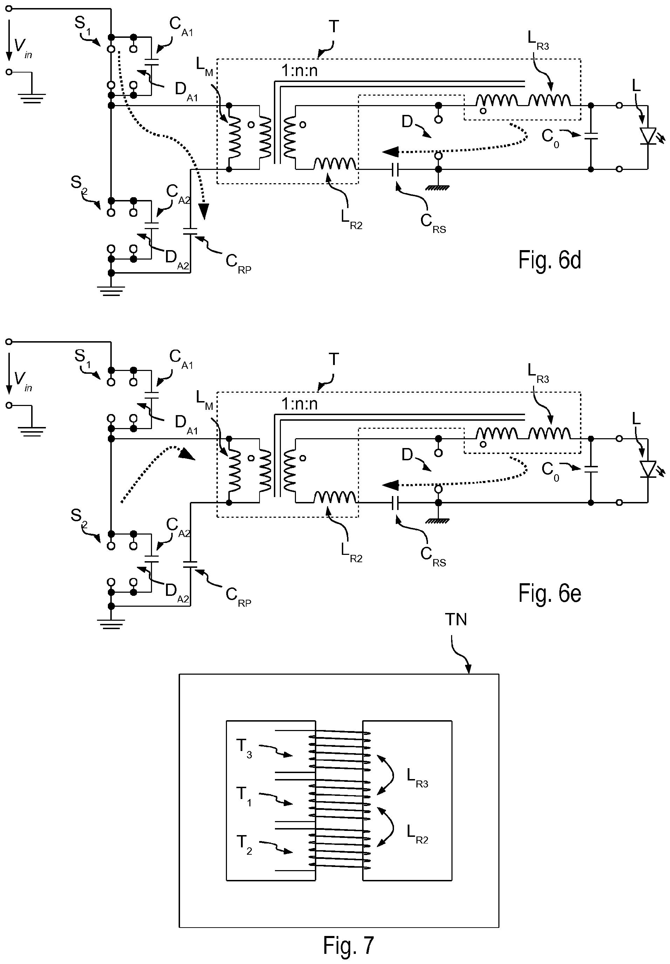

At a time $t4$, switch $S_1$ is closed and switch $S_2$ stays open. Therefore, in this operating step (M4), diodes $D_{A1}$, $D_{A2}$ are opened and diode D is opened, because voltage $V_{T2}$ across secondary winding T2 is now positive. The corresponding equivalent circuit diagram of this driving step is shown in Figure 6d.

Therefore, in this operating step the current in primary winding T1 increases, capacitor $C_{RP}$ is charged and the oscillation on the secondary side continues with period $Tres_2$.

Substantially, the duration of this step determines how much energy is subsequently transferred to the secondary side.

Therefore, at a time $t0$, switch $S_1$ is opened and switch $S_2$ stays opened. During this driving step (M5) diode D is opened. The corresponding equivalent circuit diagram is shown in Figure 6e.

In the presently considered embodiment, at time $t0$, current $I_P$ flowing through the primary side of transformer T, i.e. current $I_{LM}$ flowing through the magnetising inductance and the current which flows through the ideal primary winding T1, is negative. Therefore, current $I_P$ flowing through the primary side of transformer T also flows through capacitance $C_{A2}$, and capacitor $C_{A2}$ is discharged and voltage $V_{DS2}$ across switch $S_2$ falls to zero thanks to such a current.

Generally speaking, when voltage $V_{DS2}$ across switch $S_2$ reaches zero, diode $D_{A2}$ may be involved as well. As a matter of fact, from this point on, current $I_P$ flowing through the primary side of transformer T will only flow through diode $D_{A2}$, and voltage $V_{S2}$ across switch $S_2$ stays at zero, which preserves the condition for a zero voltage switching of switch S2.

In various embodiments, control unit 112 therefore drives the half-bridge switches $S_1$ and $S_2$ with the following steps, which are repeated periodically:

- during a first time interval $\Delta t1$, switch $S_1$ is closed and switch $S_2$ is opened (times $t4$-$t0$);
- during a second time interval $\Delta t2$, switch $S_1$ is opened and switch $S_2$ is opened (times $t0$-$t1$); wherein, during this second time interval $\Delta t2$, capacitance $C_{A1}$ associated to switch $S_2$ is charged and capacitance $C_{A2}$ associated to switch $S_2$ is discharged, thus establishing the condition for a zero voltage switching of switch $S_2$;
- during a third time interval $\Delta t3$, switch $S_1$ is opened and switch $S_2$ is closed (times $t1$-$t3$); wherein, during said third time interval $\Delta t3$ and thanks to the oscillation with reduced period $Tres_2$, diode D of the converter is deactivated (time $t2$) at zero current; and
- during a fourth time interval $\Delta t4$, switch $S_1$ is opened and switch $S_2$ is opened (times $t3$-$t4$); wherein, during said fourth time interval $\Delta t4$, capacitance $C_{A2}$ associated to switch $S_2$ is charged via the magnetisation of transformer T, and capacitance $C_{A1}$ associated to switch $S_1$ is discharged, thus establishing the condition for a zero voltage switching of switch $S_1$.

Specifically, in the previously considered embodiments, two steps may be distinguished:

a) between $t1$ and $t2$: wherein the resonant circuit transfers energy to the secondary side, partly to the load and partly to capacitor $C_{RS}$, and

b) the other time intervals ($t2$-$t3$, $t3$-$t4$, $t4$-$t0$, $t0$-$t1$), wherein energy is transferred from capacitor $C_{RS}$ to the load.

Therefore, the converter according to the present description is adapted to provide a low output ripple, because the transfer of energies to the load is continuous.

The duration of the first time interval $\Delta t1$, when switch $S_1$ is closed, may be controlled so that output current $i_o$ reaches a desired value. For example, for this purpose it is possible to use a feedback of output current $i_o$, which increases or decreases such durations until the supply signal reaches a desired value.

In various embodiments, times $\Delta t2$ and $\Delta t4$ may be constant, and the duration of time interval $\Delta t3$ may be varied in order to regulate the magnetising current.

As mentioned in the foregoing, in various embodiments the inductances of the resonant circuit may be implemented totally by the transformer, which includes two secondary windings, specifically the respective leakage inductances.

For example, Figure 7 shows an embodiment of a three chamber transformer which may be used in the previously described circuit.

Specifically, in the considered embodiment, transformer T comprises a single core TN of a ferromagnetic material, comprising three chambers. Specifically, in the presently considered embodiment, primary winding T1 may be the middle winding, and both side windings may be the secondary windings T2 and T3.

On the contrary, for example when windings have a good magnetic coupling or when leakage inductances $L_{R2}$ and $L_{R3}$ are low, inductors may be added in (e.g. direct) series connection with secondary windings T2 and/or T3, and optionally with primary winding T1 as well.

For example, Figure 8 shows an embodiment comprising a transformer with low leakage inductances $L_{R3}$ and $L_{R2}$. Therefore, in this embodiment three additional inductors $L_p$, $L_{s2}$ and $L_{s3}$ are provided, which are connected in series respectively with primary winding T1 and both secondary windings T2 and T3.

Therefore, in the presently described solutions, current $I_{LR3}$, flowing through the second secondary winding T3 and substantially supplying the load, is always positive and therefore a small current ripple may be obtained in the output current. Moreover, switches $S_1$ and $S_2$ may be switched at zero voltage and the diode may be switched at zero current.

Of course, without prejudice to the principle of the invention, the details and the embodiments may vary, even appreciably, with respect to what has been described by way of non-limiting example only, without departing from the extent of protection of the invention as defined by the annexed claims.

**Claims**

1. Electronic half-bridge converter for providing a power signal ($V_o$, $i_o$) via an output (106), said electronic half-bridge converter comprising:

   - a resonant circuit (RES); and
   - a half-bridge ($S_1$, $S_2$) comprising a first ($S_1$) and a second ($S_2$) electronic switch connected in series for connecting selectively said resonant circuit to a supply signal ($V_{in}$) or a ground ($GND_1$),

   wherein said resonant circuit (RES) comprises:

   - a transformer (T) comprising a primary winding (T1) and a first (T2) and a second secondary winding (T3), wherein said windings comprise a first and a second terminal, respectively, wherein said first (T2) and said second secondary winding (T3) have the same number of turns and are connected in anti-series,
   - at least one capacitor ($C_{RP}$), wherein said at least one capacitor ($C_{RP}$) and said primary winding (T1) are connected in series between the intermediate point between said first ($S_1$) and said second ($S_2$) electronic switch and said supply signal ($V_{in}$) and/or said ground ($GND_1$),
   - a diode (D),
   - a first branch connected in parallel with said diode (D) and comprising a first capacitor ($C_{RS}$) connected in series with said first secondary winding (T2) of said transformer (T), and
   - a second branch connected in parallel with said diode (D) and comprising said second secondary winding (T3) of said transformer (T) connected in series with said output (106),

   wherein said electronic converter comprises a control unit (112) configured for driving said first ($S_1$) and said second ($S_2$) electronic switch with the following time intervals which are repeated periodically:

   a) a first time interval ($\Delta t1$), wherein said first switch ($S_1$) is closed and said second switch ($S_2$) is opened, whereby said diode (D) is opened, because the voltage across said first secondary winding (T2) is positive;
   b) a following second time interval ($\Delta t2$), wherein said first switch ($S_1$) is opened and said second switch ($S_2$) is opened;
   c) a following third time interval ($\Delta t3$), wherein said first switch ($S_1$) is opened and said second switch ($S_2$) is closed; and
   d) a following fourth time interval ($\Delta t4$), wherein said first switch ($S_1$) is opened and said second switch ($S_2$) is opened; and

   wherein during said third time interval ($\Delta t3$) the resonance is determined by the leakage inductances ($L_{R2}$, $L_{R3}$) of said first (T2) and said second (T3) secondary winding and said first capacitor ($C_{RS}$), whereby, thanks to this resonance, the current ($I_D$) flowing through said diode (D) reaches zero and said diode (D) opens and stays opened, whereby the resonant circuit is different, and said first (T2) and said second (T3) secondary winding are no longer connected in parallel, but in series and the output is fed by the energy of said first capacitor ($C_{RS}$) till the subsequent start ($t1$) of the third time interval ($\Delta t3$).

2. Electronic converter according to Claim 1, wherein the first terminal of said first secondary winding (T2) is connected to the cathode of said diode (D) and the second terminal of said first secondary winding (T2) is connected via said first capacitor ($C_{RS}$) to the anode of said diode (D).

3. Electronic converter according to Claim 1 or Claim 2, wherein said second branch comprises said second secondary winding (T3) of said transformer (T) connected in series with a second capacitor ($C_o$), and wherein said output is connected in parallel with said second capacitor ($C_o$).

4. Electronic converter according to Claim 3, wherein the first terminal of said second secondary winding (T3) is connected to the cathode of said diode (D) and the second terminal of said second secondary winding (T3) is connected via said second capacitor ($C_o$) to the anode of said diode (D).

5. Electronic converter according to any of the previous claims, wherein the first terminal of said primary winding (T1) is connected to the intermediate point between said first ($S_1$) and said second ($S_2$) electronic switch, and said at least one a capacitor ($C_{RP}$) is connected between the second terminal of said primary winding (T1) and said supply signal ($V_{in}$) and/or said ground ($GND_1$).

6. Electronic converter according to any of the previous claims, wherein at least one inductor ($L_p$, $L_{s2}$, $L_{s3}$) is connected in series with said primary winding (T1), said first secondary winding (T2) and/or said second secondary winding (T3).

7. Method for operating an electronic converter according to any of claims 1 to 6, comprising driving said first ($S_1$) and said second ($S_2$) electronic switch with the following time intervals which are repeated periodically:

a) a first time interval ($\Delta t1$), wherein said first switch ($S_1$) is closed and said second switch ($S_2$) is opened;
b) a following second time interval ($\Delta t2$), wherein said first switch ($S_1$) is opened and said second switch ($S_2$) is opened;
c) a following third time interval ($\Delta t3$), wherein said first switch ($S_1$) is opened and said second switch ($S_2$) is closed; e
d) a following fourth time interval ($\Delta t4$), wherein said first switch ($S_1$) is opened and said second switch ($S_2$) is opened.

**Patentansprüche**

1. Elektronischer Halbbrückenwandler zum Bereitstellen eines Leistungssignals ($V_o$, $i_o$) über einen Ausgang (106), der elektronische Halbbrückenwandler umfassend:

- einen Resonanzkreis (RES); und
- eine Halbbrücke ($S_1$, $S_2$) umfassend einen ersten ($S_1$) und einen zweiten ($S_2$) elektronischen Schalter, die in Reihe geschaltet sind, um den Resonanzkreis selektiv mit einem Versorgungssignal ($V_{in}$) oder einer Masse ($GND_1$) zu verbinden,

wobei der Resonanzkreis (RES) umfasst:

- einen Transformator (T) umfassend eine Primärwicklung (T1) und eine erste (T2) und eine zweite Sekundärwicklung (T3), wobei die Wicklungen einen ersten bzw. einen zweiten Anschluss umfassen, wobei die erste (T2) und die zweite Sekundärwicklung (T3) die gleiche Anzahl von Windungen aufweisen und in Anti-Reihe verbunden sind,
- mindestens einen Kondensator ($C_{RP}$), wobei der mindestens eine Kondensator ($C_{RP}$) und die Primärwicklung (T1) in Reihe zwischen dem Zwischenpunkt zwischen dem ersten ($S_1$) und dem zweiten ($S_2$) elektronischen Schalter und dem Versorgungssignal ($V_{in}$) und/oder der Masse ($GND_1$) verbunden sind,
- eine Diode (D),
- einen ersten Zweig, der parallel zu der Diode (D) verbunden ist und umfassend einen ersten Kondensator ($C_{RS}$), der in Reihe mit der ersten Sekundärwicklung (T2) des Transformators (T) verbunden ist, und
- einen zweiten Zweig, der parallel zu der Diode (D) verbunden ist und umfassend die zweite Sekundärwicklung (T3) des Transformators (T), der in Reihe mit dem Ausgang (106) verbunden ist,

wobei der elektronische Wandler eine Steuereinheit (112) umfasst, die zum Ansteuern des ersten ($S_1$) und des zweiten ($S_2$) elektronischen Schalters mit den folgenden Zeitintervallen konfiguriert ist, die periodisch wiederholt werden:

a) einem ersten Zeitintervall ($\Delta$t1), wobei der erste Schalter ($S_1$) geschlossen ist und der zweite Schalter ($S_2$) geöffnet ist, wodurch die Diode (D) geöffnet ist, da die Spannung über der ersten Sekundärwicklung (T2) positiv ist;

b) einem folgenden zweiten Zeitintervall ($\Delta$t2), wobei der erste Schalter ($S_1$) geöffnet ist und der zweite Schalter ($S_2$) geöffnet ist;

c) einem folgenden dritten Zeitintervall ($\Delta$t3), wobei der erste Schalter ($S_1$) geöffnet ist und der zweite Schalter ($S_2$) geschlossen ist; und

d) einem folgenden vierten Zeitintervall ($\Delta$t4), wobei der erste Schalter ($S_1$) geöffnet ist und der zweite Schalter ($S_2$) geöffnet ist; und

wobei während des dritten Zeitintervalls ($\Delta$t3) die Resonanz durch die Streuinduktivitäten ($L_{R2}$, $L_{R3}$) der ersten (T2) und der zweiten (T3) Sekundärwicklung und den ersten Kondensator ($C_{RS}$) bestimmt wird,

wodurch, dank dieser Resonanz, der Strom ($I_D$), der durch die Diode (D) fließt, Null erreicht und die Diode (D) sich öffnet und geöffnet bleibt, wodurch der Resonanzkreis unterschiedlich ist, und die erste (T2) und die zweite (T3) Sekundärwicklung nicht mehr parallel verbunden sind, sondern in Reihe, und der Ausgang über die Energie des ersten Kondensators ($C_{RS}$) bis zum nachfolgenden Start (t1) des dritten Zeitintervalls ($\Delta$t3) gespeist wird.

2. Elektronischer Wandler nach Anspruch 1, wobei der erste Anschluss der ersten Sekundärwicklung (T2) mit der Kathode der Diode (D) verbunden ist und der zweite Anschluss der ersten Sekundärwicklung (T2) über den ersten Kondensator ($C_{RS}$) mit der Anode der Diode (D) verbunden ist.

3. Elektronischer Wandler nach Anspruch 1 oder Anspruch 2, wobei der zweite Zweig die zweite Sekundärwicklung (T3) des Transformators (T) umfasst, die in Reihe mit einem zweiten Kondensator ($C_o$) verbunden ist, und wobei der Ausgang parallel zu dem zweiten Kondensator ($C_o$) verbunden ist.

4. Elektronischer Wandler nach Anspruch 3, wobei der erste Anschluss der zweiten Sekundärwicklung (T3) mit der Kathode der Diode (D) verbunden ist und der zweite Anschluss der zweiten Sekundärwicklung (T3) über den zweiten Kondensator ($C_o$) mit der Anode der Diode (D) verbunden ist.

5. Elektronischer Wandler nach einem der vorhergehenden Ansprüche, wobei der erste Anschluss der Primärwicklung (T1) mit dem Zwischenpunkt zwischen dem ersten ($S_1$) und dem zweiten ($S_2$) elektronischen Schalter verbunden ist, und der mindestens eine Kondensator ($C_{RP}$) zwischen dem zweiten Anschluss der Primärwicklung (T1) und dem Versorgungssignal ($V_{in}$) und/oder der Masse ($GND_1$) verbunden ist.

6. Elektronischer Wandler nach einem der vorhergehenden Ansprüche, wobei mindestens eine Induktivität ($L_p$, $L_{s2}$, $L_{s3}$) in Reihe mit der Primärwicklung (T1), der ersten Sekundärwicklung (T2) und/oder der zweiten Sekundärwicklung (T3) verbunden ist.

7. Verfahren zum Betreiben eines elektronischen Wandlers nach einem der Ansprüche 1 bis 6, umfassend das Ansteuern des ersten ($S_1$) und des zweiten ($S_2$) elektronischen Schalters mit den folgenden Zeitintervallen, die periodisch wiederholt werden:

a) einem ersten Zeitintervall ($\Delta$t1), wobei der erste Schalter ($S_1$) geschlossen ist und der zweite Schalter ($S_2$) geöffnet ist;

b) einem folgenden zweiten Zeitintervall ($\Delta$t2), wobei der erste Schalter ($S_1$) geöffnet ist und der zweite Schalter ($S_2$) geöffnet ist;

c) einem folgenden dritten Zeitintervall ($\Delta$t3), wobei der erste Schalter ($S_1$) geöffnet ist und der zweite Schalter ($S_2$) geschlossen ist;

d) einem folgenden vierten Zeitintervall ($\Delta$t4), wobei der erste Schalter ($S_1$) geöffnet ist und der zweite Schalter ($S_2$) geöffnet ist.

**Revendications**

1. Convertisseur demi-pont électronique destiné à délivrer un signal d'alimentation ($V_o$, $i_o$) via une sortie (106), ledit convertisseur demi-pont électronique comprenant :

- un circuit résonant (RES) ; et

- un demi-pont ($S_1$, $S_2$) comprenant un premier ($S_1$) et un second ($S_2$) commutateur électronique montés en série pour relier sélectivement ledit circuit résonant à un signal d'alimentation ($V_{in}$) ou à une masse ($GND_1$),

dans lequel ledit circuit résonant RES comprend :

- un transformateur (T) comprenant un enroulement primaire (T1) et un premier (T2) et un second (T3) enroulement secondaire, lesdits enroulements comprenant une première et une seconde borne, respectivement, ledit premier (T2) et ledit second (T3) enroulement secondaire ayant le même nombre de spires et étant montés en série et en opposition,
- au moins un condensateur ($C_{RP}$), ledit au moins un condensateur ($C_{RP}$) et ledit enroulement primaire (T1) étant montés en série entre le point intermédiaire du premier ($S_1$) et du second ($S_2$) commutateur électronique et ledit signal d'alimentation ($V_{in}$) et/ou ladite masse ($GND_1$),
- une diode (D),
- une première branche montée en parallèle avec ladite diode (D) et comprenant un premier condensateur ($C_{RS}$) monté en série avec ledit premier enroulement secondaire (T2) dudit transformateur (T), et
- une seconde branche montée en parallèle avec ladite diode (D) et comprenant ledit second enroulement secondaire (T3) dudit transformateur (T) monté en série avec ladite sortie (106),

dans lequel ledit convertisseur électronique comprend une unité de contrôle (112) configurée pour piloter ledit premier ($S_1$) et ledit second ($S_2$) commutateur électronique avec les intervalles temporels ci-après qui sont répétés périodiquement :

a) un premier intervalle temporel ($\Delta t1$), lors duquel ledit premier commutateur ($S_1$) est fermé et ledit second commutateur ($S_2$) est ouvert, de sorte que ladite diode (D) est ouverte du fait que la tension aux bornes dudit premier enroulement secondaire (T2) est positive ;
b) un second intervalle temporel ($\Delta t2$) consécutif, lors duquel ledit premier commutateur ($S_1$) est ouvert et ledit second commutateur ($S_2$) est ouvert ;
c) un troisième intervalle temporel ($\Delta t3$) consécutif, lors duquel ledit premier commutateur ($S_1$) est ouvert et ledit second commutateur ($S_2$) est fermé ; et
d) un quatrième intervalle temporel ($\Delta t4$) consécutif, lors duquel ledit premier commutateur ($S_1$) est ouvert et ledit second commutateur ($S_2$) est ouvert ; et

dans lequel durant ledit troisième intervalle temporel ($\Delta t3$) la résonance est déterminée par les inductances de fuite ($L_{R2}$, $L_{R3}$) dudit premier (T2) et dudit second (T3) enroulement secondaire et dudit premier condensateur ($C_{RS}$), de sorte que, grâce à cette résonance, le courant ($I_D$) traversant ladite diode (D) atteint zéro et ladite diode (D) s'ouvre et reste ouverte, de sorte que le circuit résonant devient différent, et ledit premier (T2) et ledit second (T3) enroulement secondaire ne sont plus montés en parallèle mais en série, et la sortie est alimentée par l'énergie dudit premier condensateur ($C_{RS}$) jusqu'au début ($t1$) consécutif du troisième intervalle temporel ($\Delta t3$).

2. Convertisseur électronique selon la revendication 1, dans lequel la première borne dudit premier enroulement secondaire (T2) est reliée à la cathode de ladite diode (D), et la seconde borne dudit premier enroulement secondaire (T2) est reliée via ledit premier condensateur ($C_{RS}$) à l'anode de ladite diode.

3. Convertisseur électronique selon la revendication 1 ou la revendication 2, dans lequel ladite seconde branche comprend ledit second enroulement secondaire (T3) dudit transformateur (T) qui est monté en série avec un second condensateur ($C_o$), et dans lequel ladite sortie est reliée en parallèle avec ledit second condensateur ($C_o$).

4. Convertisseur électronique selon la revendication 3, dans lequel la première borne dudit second enroulement secondaire (T3) est reliée à la cathode de ladite diode (D), et la seconde borne dudit second enroulement secondaire (T3) est reliée via ledit second condensateur ($C_o$) à l'anode de ladite diode (D).

5. Convertisseur électronique selon l'une des revendications précédentes, dans lequel la première borne dudit enroulement primaire (T1) est reliée au point intermédiaire entre ledit premier ($S_1$) et ledit second ($S_2$) commutateur électronique, et ledit au moins un condensateur ($C_{RP}$) est monté entre la seconde borne dudit enroulement primaire (T1) et ledit signal d'alimentation ($V_{in}$) et/ou ladite masse ($GND_1$).

6. Convertisseur électronique selon l'une des revendications précédentes, dans lequel au moins une inductance ($L_p$, $L_{s2}$, $L_{s3}$) est montée en série avec ledit enroulement primaire (T1), ledit premier enroulement secondaire (T2) et/ou ledit second enroulement secondaire (T3) .

**7.** Procédé de mise en œuvre d'un convertisseur électronique selon l'une des revendications 1 à 6, comprenant le pilotage dudit premier ($S_1$) et ledit second ($S_2$) commutateur électronique avec les intervalles temporels ci-après qui sont répétés périodiquement :

a) un premier intervalle temporel ($\Delta t1$), lors duquel ledit premier commutateur ($S_1$) est fermé et ledit second commutateur ($S_2$) est ouvert ;
b) un second intervalle temporel ($\Delta t2$) consécutif, lors duquel ledit premier commutateur ($S_1$) est ouvert et ledit second commutateur ($S_2$) est ouvert ;
c) un troisième intervalle temporel ($\Delta t3$) consécutif, lors duquel ledit premier commutateur ($S_1$) est ouvert et ledit second commutateur ($S_2$) est fermé ; et
d) un quatrième intervalle temporel ($\Delta t4$) consécutif, lors duquel ledit premier commutateur ($S_1$) est ouvert et ledit second commutateur ($S_2$) est ouvert.

Fig. 1

Fig. 2

Fig. 3

Fig. 4

EP 3 160 028 B1

Fig. 5

Fig. 6a

Fig. 6b

Fig. 6c

Fig. 6d

Fig. 6e

Fig. 7

Fig. 8

**EP 3 160 028 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2015044846 A2
- US 2010259241 A1
- US 2010265741 A1